# EUROPEAN PATENT APPLICATION

(11) **EP 3 296 852 A1**
(43) Date of publication of application: **21.03.2018**
(21) Application number: 15891770.8
(22) Date of filing: 08.05.2015
(51) Int. Cl.: G06F 3/0488, G06F 3/048

(54) **ITEM SELECTION METHOD, ITEM SELECTION PROGRAM, TERMINAL DEVICE, MENU DISPLAY METHOD, AND MENU DISPLAY PROGRAM**

(71) Applicant: Fujitsu Limited, Kawasaki-shi, Kanagawa 211-8588 (JP)
(72) Inventor: MATSUDA, Yugo, Kawasaki-shi Kanagawa 211-8588 (JP); TSUYUKI, Yasuhiro, Kawasaki-shi Kanagawa 211-8588 (JP); SUGISAKI, Hidekazu, Kawasaki-shi Kanagawa 211-8588 (JP)
(74) Representative: Hoffmann Eitle
(86) International application number: PCT/JP2015/063381
(87) International publication number: WO 2016/181444

(57) **Abstract**

Provided are an item selection method, an item selection program, a terminal device, a menu display method, and a menu display program that can promptly select a plurality of items. The item selection method causes a computer (100) to execute a process of detecting, in accordance with a handwriting input related to a plurality of selection items in the displayed selection item group, the plurality of selection items as a selection target.

## Description

### [Technical Field]

The present invention relates to an item selection method, an item selection program, a terminal device, a menu display method, and a menu display program.

### [Background Art]

Conventionally, in devices, such as tablet terminals, smart phones, or the like, that have touch panels (hereinafter, also referred to as touch devices), when selecting a plurality of items, such as menus, images, or the like, for example, after having switched to a multiple selection mode, the plurality of items are selected. Switching to the multiple selection mode is performed by, for example, a long press of the items, a selection of a shift button, or the like. Furthermore, in some cases, in a touch device having a multi-touch function, for example, a user selects each of the items by user's fingers, thereby selecting the plurality of items.

### [Citation List]

### [Patent Citation]

Patent Literature 1: Japanese Laid-open Patent Publication No. 2012-88990

### [Summary of Invention]

### [Technical Problem]

However, for example, if the user attempts to select the plurality of items without switching to the multiple selection mode, the screen is shifted based on a first touch as an input, and, in some cases, the operation may possibly be different from the intension of the user. Furthermore, the width of the arrangement of the items that can be selected and that are displayed by the touch device is greater than the range of the user's hand and, thus, the user is not always able to select the plurality of target items. Consequently, if the user attempts to select the plurality of items, a long period of time may sometimes be needed for the operation.

Accordingly, it is an object in one aspect of an embodiment of the present invention to provide an item selection method, an item selection program, a terminal device, a menu display method, and a menu display program that can promptly select a plurality of items.

### [Solution to Problem]

According to an aspect of an embodiment, an item selection method includes: detecting, in accordance with a handwriting input related to a plurality of selection items in a displayed selection item group, the plurality of selection items as a selection target.

### [Advantageous Effects of Invention]

It is possible to promptly select a plurality of items.

### [Brief Description of Drawings]

FIG. 1 is a block diagram illustrating an example of a terminal device according to a first embodiment.
FIG. 2 is a diagram illustrating an example of a selection flag storage unit.
FIG. 3 is a diagram illustrating an example of a screen shift in accordance with a selection of a plurality of items.
FIG. 4 is a diagram illustrating another example of the screen shift in accordance with a selection of a plurality of items.
FIG. 5 is a diagram illustrating an example of specifying associated items.
FIG. 6 is a diagram illustrating another example of specifying associated items.
FIG. 7 is a diagram illustrating another example of specifying associated items.
FIG. 8 is a flowchart illustrating an example of a selection receiving process according to the first embodiment.
FIG. 9A is a flowchart illustrating another example of the selection receiving process according to the first embodiment.
FIG. 9B is a flowchart illustrating another example of the selection receiving process according to the first embodiment.
FIG. 9C is a flowchart illustrating another example of a selection receiving process according to the first embodiment.
FIG. 10 is a block diagram illustrating an example of a terminal device according to a second embodiment.
FIG. 11 is a flowchart illustrating an example of a selection receiving process according to the second embodiment.
FIG. 12 is a flowchart illustrating another example of the selection receiving process according to the second embodiment.
FIG. 13 is a block diagram illustrating an example of a terminal device according to a third embodiment.
FIG. 14 is a flowchart illustrating an example of a selection receiving process according to the third embodiment.
FIG. 15 is a flowchart illustrating another example of the selection receiving process according to the third embodiment.
FIG. 16 is a block diagram illustrating an example of a terminal device according to a fourth embodiment.
FIG. 17 is a diagram illustrating an example of a multiple selection start instruction.
FIG. 18 is a flowchart illustrating an example of a selection receiving process according to the fourth embodiment.
FIG. 19 is a flowchart illustrating another example of the selection receiving process according to the fourth embodiment.
FIG. 20 is a diagram illustrating an example of a computer that executes a selection program.

### [Embodiments for Carrying Out the Invention]

Preferred embodiments of an item selection method, an item selection program, a terminal device, a menu display method, and a menu display program will be explained with reference to accompanying drawings. Furthermore, the disclosed technology is not limited to the embodiments. Furthermore, the embodiment described below may also be used in any appropriate combination as long as the embodiments do not conflict with each other.

### First Embodiment

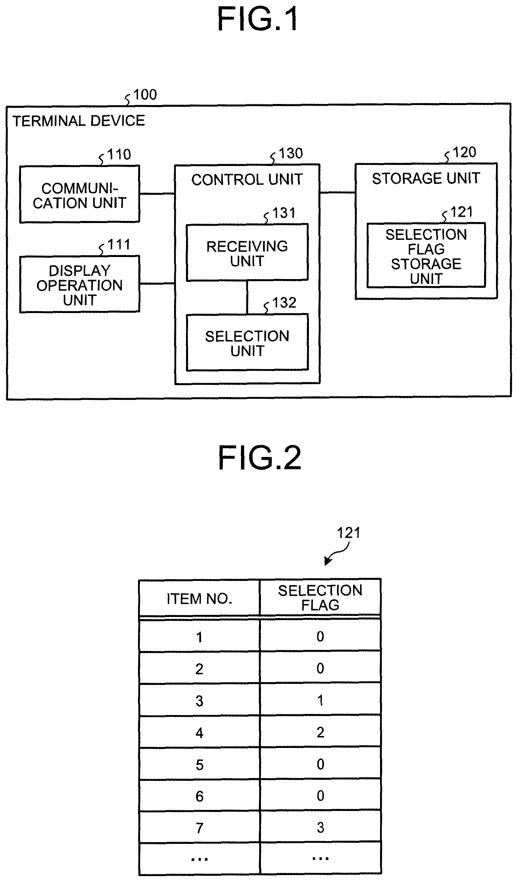

FIG. 1 is a block diagram illustrating an example of a terminal device according to a first embodiment. A terminal device 100 illustrated in FIG. 1 is a computer used by, for example, a customer, i.e., a user, who makes an order at an eating place. The terminal device 100 displays various kinds of menu screens received from, for example, a server device (not illustrated) and provides the screens to the user. The terminal device 100 can use a Web browser regarding, for example, a display and an operation of the various menu screens, or the like. Furthermore, the terminal device 100 receives a handwriting input performed with respect to the display screen of the various menu screens, or the like. As an example of the terminal device 100, a tablet terminal may be used. For the terminal device 100, in addition to a portable type terminal, such as the tablet terminal described above, or the like, a stationary type personal computer may also be used as the terminal device 100. Furthermore, for the terminal device 100, as the portable type terminal, in addition to the tablet terminal described above, for example, a mobile communication terminal, such as a portable type personal computer, a smart phone, a mobile phone, or the like, may also be used.

The terminal device 100 receives an input performed, by a handwriting input, on each of display areas that are associated with a plurality of items on the screen on which two or more items are displayed. The terminal device 100 changes the plurality of items associated with the received inputs to a selected state and selects the items. Namely, the terminal device 100 can select the plurality of items indicated by the handwriting inputs without performing a screen shift. Consequently, the terminal device 100 can promptly select the plurality of items.

In the following, the configuration of the terminal device 100 will be described. As illustrated in FIG. 1, the terminal device 100 includes a communication unit 110, a display operation unit 111, a storage unit 120, and a control unit 130. Furthermore, the terminal device 100 may also include, in addition to the functioning units illustrated in FIG. 1, various functioning units included in a known computer, for example, functioning units, such as various input devices, audio output devices, or the like.

The communication unit 110 is implemented by, for example, a communication module, a network interface card (NIC), or the like, such as a wireless LAN, or the like. The communication unit 110 is a communication interface that is connected to a server device (not illustrated), or the like via a network (not illustrated) in a wired or wireless manner and that manages communication of information with the server device, or the like.

The display operation unit 111 is a display device that is used to display various kinds of information and is an input device that is used to receive various operations from a user. For example, the display operation unit 111 is implemented, as a display device, by a liquid crystal display, or the like. Furthermore, for example, the display operation unit 111 is implemented, as an input device, by a touch panel or the like. Namely, the display operation unit 111 is composed of an integrated combination of the display device and the input device. The display operation unit 111 outputs the operation that is input by the user to the control unit 130 as operation information. Furthermore, the operation information is, for example, a stroke input, i.e., a handwriting input, that indicates the coordinates on the display screen during the period of time from when the finger of the user touches on the touch panel until the finger leaves.

The storage unit 120 is implemented by, for example, a storage device, such as a semiconductor memory device including, for example, a random access memory (RAM), a flash memory, or the like; a hard disk; an optical disk; or the like. The storage unit 120 includes a selection flag storage unit 121. Furthermore, the storage unit 120 stores therein information, such as a multiple selection flag, or the like, that is used for the process performed by the control unit 130.

The selection flag storage unit 121 stores therein each of the items of the plurality of items by associating the items with selection flags each of which indicates a selection state. FIG. 2 is a diagram illustrating an example of a selection flag storage unit. As illustrated in FIG. 2, the selection flag storage unit 121 has items such as "item No." and "selection flag". The selection flag storage unit 121 stores therein, for example, a single record for each "item No.".

The "item No." is an identifier that identifies the plurality of items. The "selection flag" is information that indicates whether the subject item is being selected. The selection flag represents, for example, an unselected state as "0" and a selected state as a positive integer, for example, "1". Furthermore, in a case of the selected state, the selection flag may also sequentially increase the number in the order in which the items are selected and indicate the selected order. In the example illustrated in FIG. 2, because the selection flags "1", "2", and "3" are set to the item Nos. "3", "4", and "7", respectively, this indicates that the items are sequentially selected in the order of the item Nos. of "3", "4", and "7".

A description will be given here by referring back to FIG. 1. The control unit 130 is implemented by, for example, a central processing unit (CPU), a micro processing unit (MPU), or the like executing, in a RAM as a work area, the program that is stored in an inner storage device. Furthermore, the control unit 130 may also be implemented by, for example, an integrated circuit, such as an application specific integrated circuit (ASIC), a field programmable gate array (FPGA), or the like. The control unit 130 includes a receiving unit 131 and a selection unit 132 and implements or performs the function or the operation of the information processing described below. Furthermore, the internal configuration of the control unit 130 is not limited to the configuration illustrated in FIG. 1 but may also be another configuration as long as the information processing, which will be described later, is performed. Furthermore, the control unit 130 outputs data on various display screens, such as menu screens, or the like, to the display operation unit 111 and displays the data. Furthermore, in the control unit 130, various kinds of software are operated. Each of the pieces of the software includes the receiving unit 131 and the selection unit 132.

The receiving unit 131 receives an input performed, by a handwriting input, on each of display areas that are associated with a plurality of items on the screen on which two or more items are displayed. Namely, on the menu screen on which the plurality of items is displayed, the receiving unit 131 receives, for example, a handwriting input, i.e., a stroke input, performed by a user with respect to the display area of the items. In other words, the receiving unit 131 receives operation information, for example, a stroke input, from the display operation unit 111. Furthermore, the stroke input may also be, for example, the information on the coordinates on the display screen. The receiving unit 131 determines whether the received stroke is a first stroke or determines whether the previous stroke is a selection stroke. The selection stroke mentioned here is a stroke that is previously defined in order to select an item and is, for example, a circle, a check mark, or the like.

If the received stroke is the first stroke or if the previous stroke is the selection stroke, the receiving unit 131 performs the recognition of the handwritten character with respect to the received stroke. The receiving unit 131 determines whether, based on the recognition result of the handwritten character, the received stroke is the selection stroke. If the received stroke is the selection stroke, the receiving unit 131 sets the multiple selection flag by setting, for example, "1" to the multiple selection flag provided in the storage unit 120.

If the received stroke is not the first stroke or if the previous stroke is not the selection stroke or, alternatively, if the received stroke is not the selection stroke, the receiving unit 131 deletes the multiple selection flag by setting, for example, "0" to the multiple selection flag.

The receiving unit 131 determines whether the stroke input has been ended. If a predetermined period of time, for example, one second, has elapsed after, for example, the previous stroke was input, the receiving unit 131 determines that the stroke input has been ended. If the stroke input has not been ended, the receiving unit 131 receives a new stroke input. If the stroke input has been ended, the receiving unit 131 outputs, to the selection unit 132, input completion information including the coordinates of the stroke input and the recognition result of the handwritten character. Furthermore, the receiving unit 131 may also include the order of the stroke inputs in the input completion information.

If the input completion information and the recognition result of the handwritten character are input from the receiving unit 131, the selection unit 132 determines whether the multiple selection flag has been set. If the multiple selection flag has been set, the selection unit 132 specifies, based on the coordinates of the stroke input of the input completion information, the associated items from among the plurality of items. The selection unit 132 changes the specified items to the selected state. Namely, the selection unit 132 sets the specified items to the selected state. Furthermore, if the order of the stroke inputs is included in the input completion information, the selection unit 132 changes the specified items to the selection state in the order in which the items are input. Furthermore, the selection unit 132 stores the order of the stroke inputs in the selection flag storage unit 121.

The selection unit 132 finalizes the selection state if a decision input for finalizing the selection state is input from the display operation unit 111 or if a predetermined period of time, for example, three seconds, has elapsed. The selection unit 132 shifts the display screen based on the information on the finalized and selected items. For example, if a plurality of items on the menu screen is selected, the selection unit 132 shifts the display screen to the menu screen on the basis of the selected items. Furthermore, the selection unit 132 may also refer to the selection flag storage unit 121 and finalize the selection state based on the order of the stroke inputs.

If the multiple selection flag has not been set, the selection unit 132 outputs the recognition result of the handwritten character to, for example, an input field provided on the display screen. Namely, the selection unit 132 reflects the recognition result of the handwritten character onto the display screen of the display operation unit 111. Furthermore, the selection unit 132 is also an example of a detecting unit that detects a plurality of selection items as selection targets in accordance with the handwriting input related to the plurality of selection items included in the displayed selection item group.

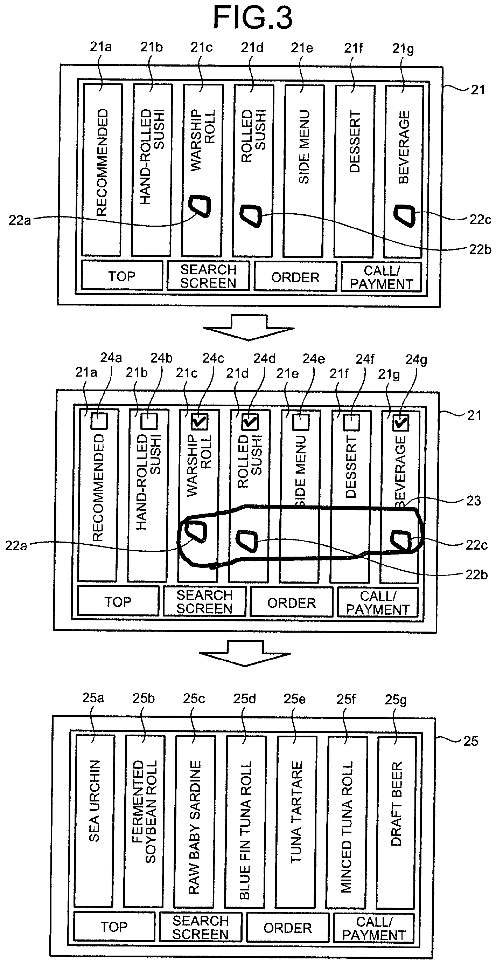

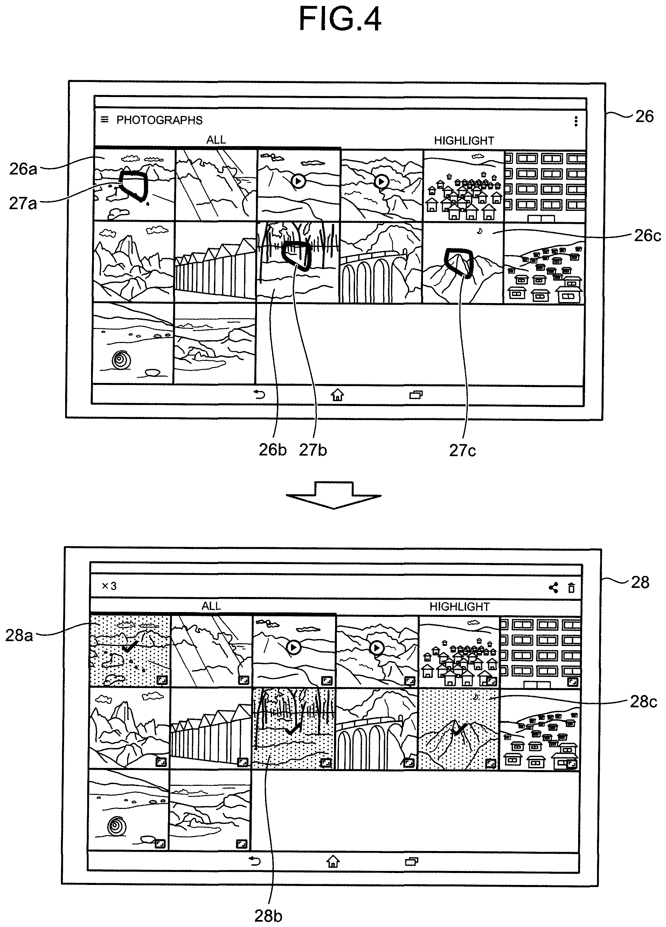

In the following, an example of the screen shift will be described with reference to FIGS. 3 and 4. FIG. 3 is a diagram illustrating an example of a screen shift in accordance with the selection of a plurality of items. As illustrated in FIG. 3, the terminal device 100 displays a display screen 21 on the display operation unit 111. The display screen 21 is, for example, a menu screen. The display screen 21 includes, for example, items 21a to 21g. Here, circles 22a to 22c are input to the display screen 21 as the selection strokes by a user. On the display screen 21, if the selection strokes are input, the associated items are changed to the selected state and are set to the selected state. In the example illustrated in FIG. 3, check boxes 24a to 24g indicating the selection state are displayed on the upper portion of the items 21a to 21g. Furthermore, in the example illustrated in FIG. 3, the check box 24c of the item 21c associated with the circle 22a, the check box 24d of the item 21d associated with the circle 22b, and the check box 24g of the item 21g associated with the circle 22c become the selected state.

If a predetermined period of time has elapsed or a stroke 23 is input as a decision input in the state in which the check boxes 24c, 24d, and 24g are being selected on the display screen 21, the terminal device 100 shifts the display screen 21 to a display screen 25. On the display screen 25, the items 25a to 25g associated with the selected items are displayed. For example, "sea urchin" in the item 25a, "raw baby sardine" in the item 25c, and "tuna tartare" in the item 25e are the items belonging to "warship roll" in the item 21c on the display screen 21. Furthermore, for example, "fermented soybean roll" in the item 25b, "blue fin tuna roll" in the item 25d, and "minced tuna roll" in the item 25f are the items belonging to "rolled sushi" in the item 21d on the display screen 21. Furthermore, for example, "draft beer" in the item 25g is the item belonging to "beverage" in the item 21g on the display screen 21.

FIG. 4 is a diagram illustrating another example of the screen shift in accordance with the selection of a plurality of items. FIG. 4 indicates a case in which, for example, a plurality of images in an image viewer is selected. As illustrated in FIG. 4, the terminal device 100 displays a display screen 26 on the display operation unit 111. On the display screen 26, for example, it is assumed that a user inputs circles 27a to 27c as the selection strokes with respect to images 26a to 26c. If, for example, a predetermined period of time has elapsed after the circle 27a to 27c were input on the display screen 26, the terminal device 100 shifts the display screen 26 to a display screen 28. On the display screen 28, for example, check marks are added to the images 28a to 28c that are associated with the images 26a to 26c, respectively, on the display screen 26 and it is indicated that the images 28a to 28c are in the selection state.

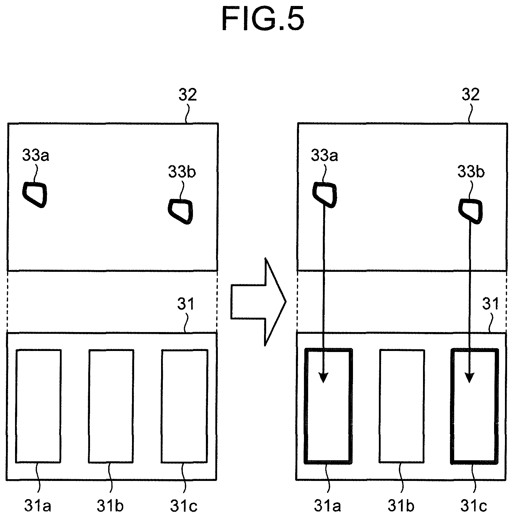

In the following, specifying associated items will be described with reference to FIGS. 5 to 7. FIG. 5 is a diagram illustrating an example of specifying associated items. As illustrated in FIG. 5, on the display operation unit 111, a display screen 31 on which menu items or the like are displayed and a trajectory screen 32 on which the trajectory of the stroke input is displayed are displayed. On the display screen 31, for example, menu items 31a, 31b, and 31c are displayed. Furthermore, in this case, the display screen 31 is a menu screen. Here, if selection strokes 33a and 33b are input by a handwriting input of a user, the terminal device 100 specifies that, based on the coordinates of the stroke input, the associated item of the selection stroke 33a is the menu item 31a. Furthermore, the terminal device 100 specifies that, based on the coordinates of the stroke input, the associated item of the selection stroke 33b is the menu item 31c.

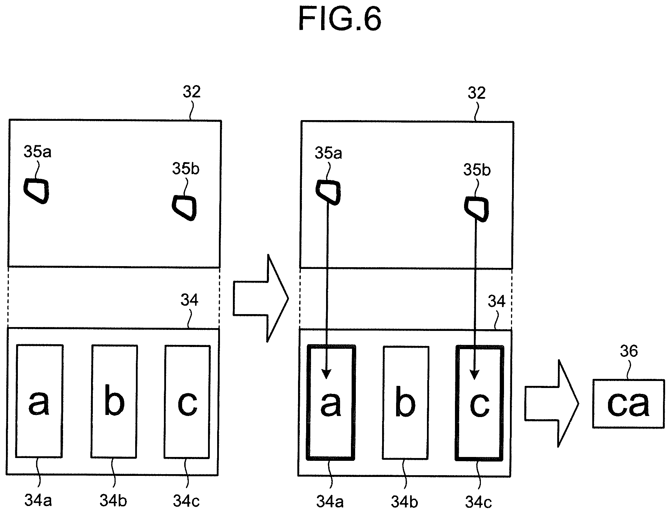

FIG. 6 is a diagram illustrating another example of specifying associated items. As illustrated in FIG. 6, on the display operation unit 111, a display screen 34 on which items or the like are displayed and the trajectory screen 32 on which the trajectory of the stroke inputs is displayed are displayed. On the display screen 34, for example, items 34a, 34b, and 34c are displayed. Furthermore, it is assumed that, for example, characters of "a", "b", and "c" are allocated to the items 34a, 34b, and 34c, respectively. Here, if the selection stroke 35b is input by a handwriting input from a user and then a selection stroke 35a is input, the terminal device 100 specifies that, based on the coordinates of the stroke input, the associated item of the selection stroke 35b is the item 34c. Furthermore, the terminal device 100 specifies that, based on the coordinates of the stroke input, the associated item of the selection stroke 35a is the item 34a. Furthermore, in accordance with the order of stroke inputs, the terminal device 100 stores, in the associated item Nos. in the selection flag storage unit 121, the order in the order of the characters "c" and "a". Namely, input characters 36 are in the order of "ca".

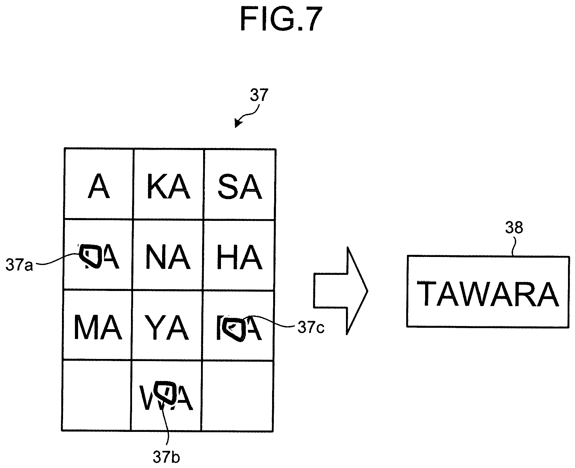

FIG. 7 is a diagram illustrating another example of specifying associated items. As illustrated in FIG. 7, on the display operation unit 111, a display screen 37 that is used to input characters is displayed. On the display screen 37, for example, if the selection strokes are input by a user in the order of the selection strokes 37a, 37b, and 37c, the terminal device 100 specifies that the associated item of the selection stroke 37a is the character of "ta". Furthermore, the terminal device 100 specifies that the associated item of the selection stroke 37b is the character of "wa". Furthermore, the terminal device 100 specifies that the associated item of the selection stroke 37c is the character of "ra". Furthermore, in accordance with the order of stroke inputs, the terminal device 100 stores, in the associated item Nos. in the selection flag storage unit 121, the order in the order of the characters of "ta", "wa", and "ra". Namely, input characters 38 are in the order of "tawara".

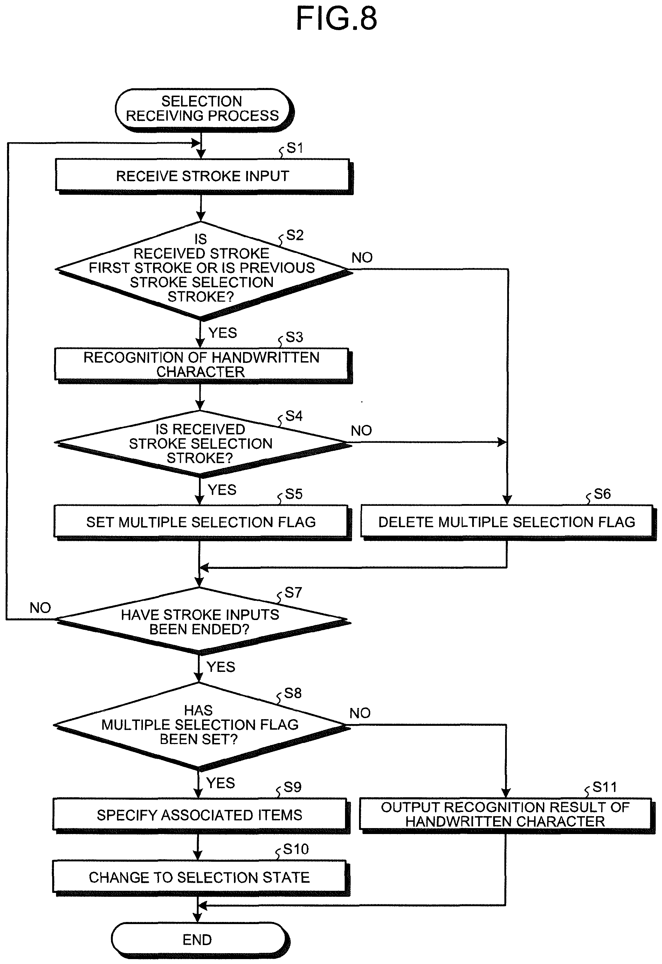

In the following, the operation of the terminal device 100 according to the first embodiment will be described. FIG. 8 is a flowchart illustrating an example of a selection receiving process according to the first embodiment.

The receiving unit 131 receives operation information, for example, a stroke input from the display operation unit 111 (Step S1). The receiving unit 131 determines whether the received stroke is the first stroke or determines whether the previous stroke is the selection stroke (Step S2). If the received stroke is the first stroke or the previous stroke is the selection stroke (Yes at Step S2), the receiving unit 131 performs the recognition of the handwritten character with respect to the received stroke (Step S3).

The receiving unit 131 determines whether, based on the recognition result of the handwritten character, the received stroke is the selection stroke (Step S4). If the received stroke is the selection stroke (Yes at Step S4), the receiving unit 131 sets the multiple selection flag (Step S5). If the received stroke is not the selection stroke (No at Step S4), the receiving unit 131 deletes the multiple selection flag (Step S6). Furthermore, if the received stroke is not the first stroke or if the previous stroke is not the selection stroke (No at Step S2), the receiving unit 131 deletes the multiple selection flag (Step S6).

The receiving unit 131 determines whether the stroke inputs have been ended (Step S7). If the stroke inputs have not been ended (No at Step S7), the receiving unit 131 returns to Step S1. If the stroke inputs have been ended (Yes at Step S7), the receiving unit 131 outputs the input completion information including the coordinates of the stroke inputs and the recognition result of the handwritten character to the selection unit 132.

If the input completion information and the recognition result of the handwritten character are input from the receiving unit 131, the selection unit 132 determines whether the multiple selection flag has been set (Step S8). If the multiple selection flag has been set (Yes at Step S8), the selection unit 132 specifies the associated items from among the plurality of items based on the coordinates of the stroke inputs of the input completion information (Step S9). The selection unit 132 changes the specified items to the selection state (Step S10). If a decision input for finalizing the selection state is input or after elapse of a predetermined period of time, the selection unit 132 finalizes the selection state. The selection unit 132 shifts the display screen based on the information on the finalized and selected items. If the multiple selection flag has not been set (No at Step S8), the selection unit 132 outputs the recognition result of the handwritten character (Step S11), and reflects the recognition result onto the display screen of the display operation unit 111. Consequently, the terminal device 100 can promptly select the plurality of items without shifting to the multiple selection mode. Furthermore, the terminal device 100 can perform an input of a character and an input for controlling, for example, a shift of the menu screen, or the like, without distinction. Namely, because the terminal device 100 does not need to switch an input of a character and an input for controlling, for example, a shift of the menu screen, or the like, the terminal device 100 can promptly select the plurality of items.

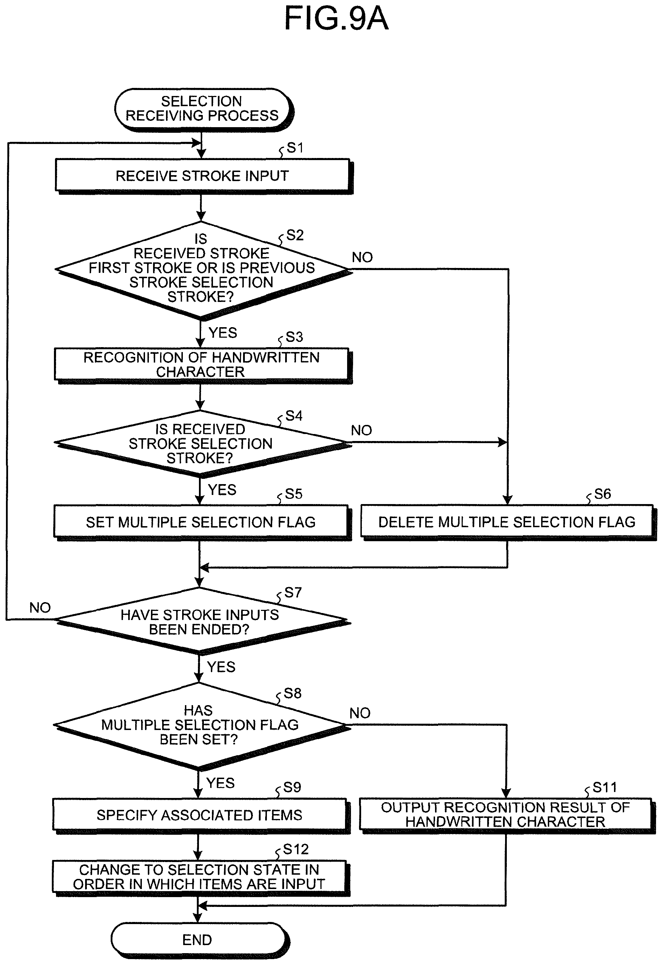

In the following, the selection receiving process performed when a plurality of items is selected based on the order of the inputs of selection strokes will be described with reference to FIG. 9A. FIG. 9A is a flowchart illustrating another example of the selection receiving process according to the first embodiment. Furthermore, in a description of the selection receiving process illustrated in FIG. 9A, regarding the steps in which the same process as that performed in the selection receiving process illustrated in FIG. 8, descriptions thereof will be omitted.

In the selection receiving process illustrated in FIG. 9A, if the stroke inputs have been ended (Yes at Step S7), the receiving unit 131 outputs, to the selection unit 132, the coordinates of the stroke inputs, the input completion information including the order, and the recognition result of the handwritten characters. Furthermore, the selection unit 132 stores, in the selection flag storage unit 121, the order of the stroke inputs included in the input completion information.

After having specified the associated items at Step S9, the selection unit 132 refers to the selection flag storage unit 121 and changes the specified items to the selection state in the order in which the items are input (Step S12). If a decision input is input or after elapse of a predetermined period of time, the selection unit 132 finalizes the selection state. The selection unit 132 shifts the display screen based on the information on the finalized and selected items including the input order. Consequently, the terminal device 100 can promptly select the plurality of items by reflecting the input order without shifting to the multiple selection mode.

In this way, the terminal device 100 receives an input performed, by a handwriting input, on each of display areas that are associated with a plurality of items on the screen on which two or more items are displayed. Furthermore, the terminal device 100 changes the plurality of items associated with the received inputs to the selected state and selects the items. Consequently, it is possible to promptly select the plurality of items.

Furthermore, the terminal device 100 finalizes the selection state in accordance with the decision input. Consequently, a user can control the finalization timing of the selection state.

Furthermore, the terminal device 100 finalizes the selection state after elapse of a predetermined period of time. Consequently, it is possible for a user to promptly select a plurality of items by simply selecting the target items.

Furthermore, the terminal device 100 selects a plurality of items in the order of inputs performed by handwriting inputs. Consequently, it is possible to promptly select the plurality of items in consideration of the order of inputs.

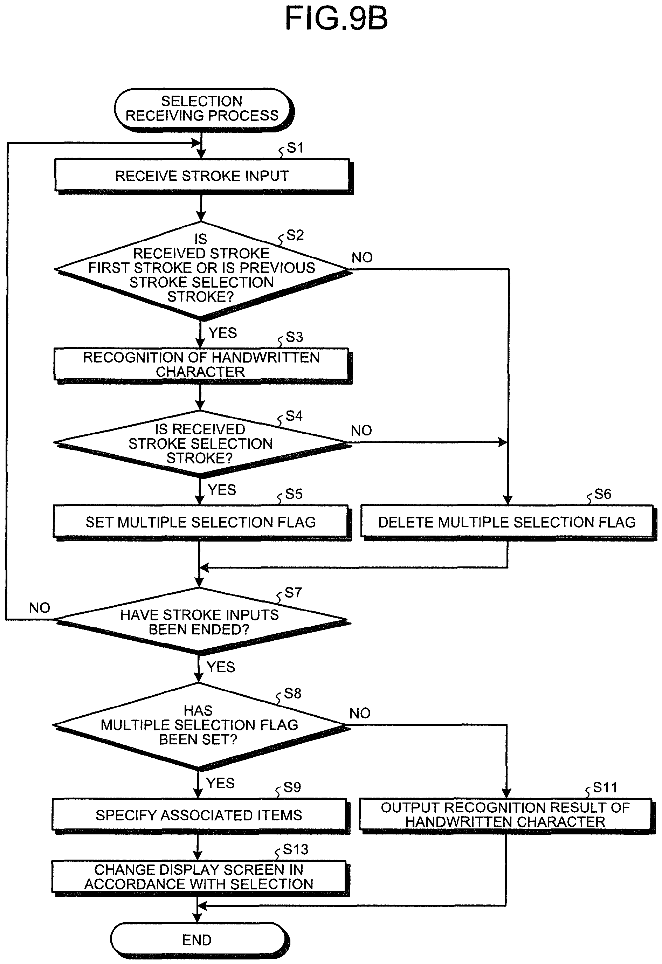

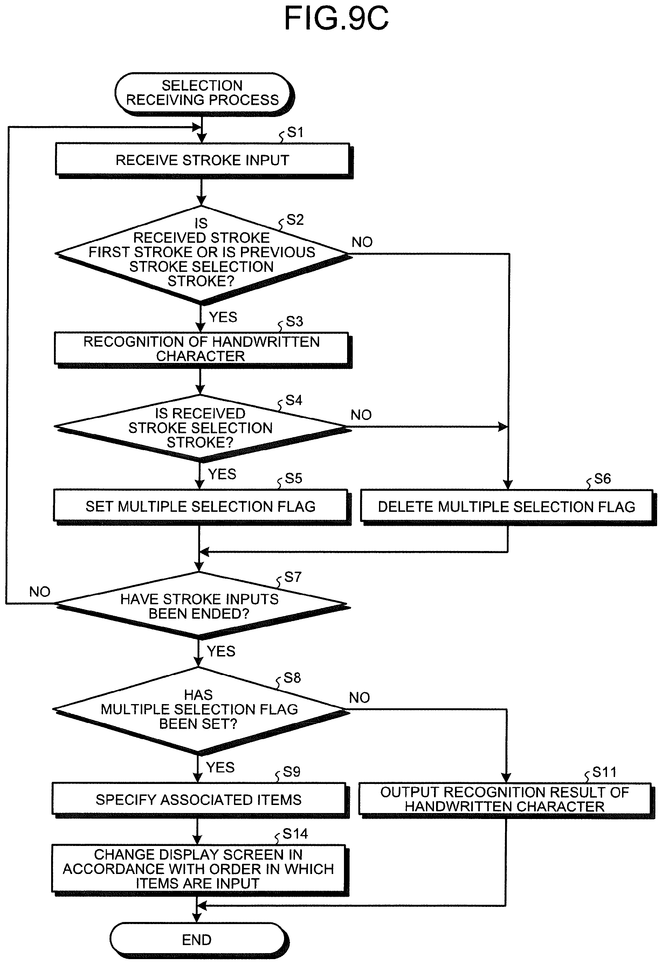

Furthermore, in the first embodiment described above, an example has been described in which the display screen is shifted after having finalized the state in which a plurality of items was selected; however, the embodiment is not limited to this. For example, after having determined that a plurality of items was selected, a screen shift may also immediately be performed (without changing a display of the items to the selected state). FIGS. 9B and 9C are flowcharts each illustrating another example of the selection receiving process according to the first embodiment. Furthermore, in descriptions of the selection receiving processes illustrated in FIGS. 9B and 9C, regarding the steps in which the same process as that performed in the selection receiving process illustrated in FIG. 8, descriptions thereof will be omitted. In the selection receiving process illustrated in FIG. 9B, after having specified the items associated at Step S9, the selection unit 132 shifts to the display screen of the information related to the plurality of selected selection items. Furthermore, in the selection receiving process illustrated in FIG. 9C, after having specified the items associated at Step S9, the selection unit 132 shifts, based on the information on the finalized and selected items including the order in which the items are input, to the display screen of the information related to the plurality of selected selection items. For example, if a description will be given by using the example illustrated in FIG. 3, the display screen 21 illustrated in the upper part in FIG. 3 is shifted to the display screen 25 illustrated in the lower part in FIG. 3 without passing through the display screen illustrated in the middle part in FIG. 3.

Furthermore, in the first embodiment described above, each of the pieces of software executed by the control unit 130 includes the receiving unit 131 and the selection unit 132; however, the embodiment is not limited to this. For example, the control unit 130 may also include first software that includes the items to be selected and second software that outputs, to the first software based on the stroke inputs, a change instruction to change to the multiple selection mode and a selection instruction to select a plurality of items. The embodiment in this case will be described below as a second embodiment.

### Second Embodiment

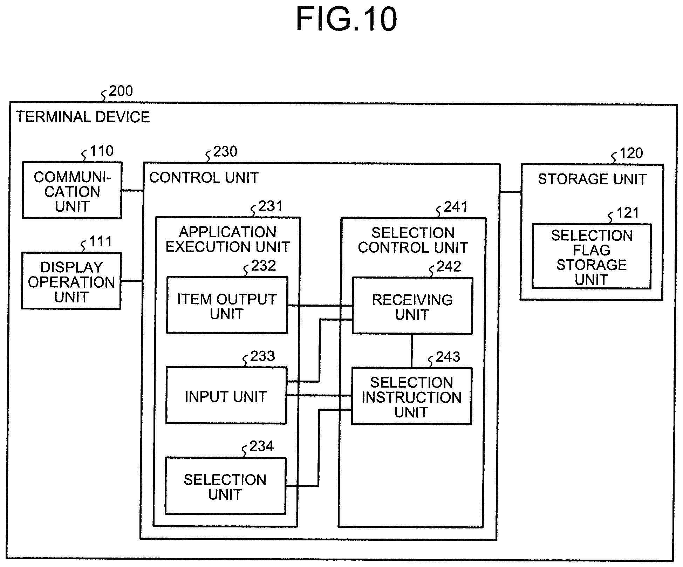

FIG. 10 is a block diagram illustrating an example of a terminal device according to a second embodiment. Furthermore, by assigning the same reference numerals to components having the same configuration as those in the terminal device 100 according to the first embodiment, overlapped configurations and operations thereof will be omitted. A terminal device 200 according to second embodiment differs from the terminal device 100 according to the first embodiment in that the function of the receiving unit 131 and the selection unit 132 is divided into an application execution unit 231 that executes the first software and a selection control unit 241 that executes the second software.

The terminal device 200 differs from the terminal device 100 in that the terminal device 200 includes a control unit 230, instead of the control unit 130. Furthermore, because the function of the control unit 230 is the same as that of the control unit 130 except that the function of the receiving unit 131 and the selection unit 132 is divided into the application execution unit 231 and the selection control unit 241, differences will be described and descriptions of the same parts will be omitted. The application execution unit 231 includes an item output unit 232, an input unit 233, and a selection unit 234. Furthermore, the selection control unit 241 includes a receiving unit 242 and a selection instruction unit 243.

The item output unit 232 acquires information including the coordinates of each of the items on the screen on which two or more items included in the first software are displayed. The item output unit 232 outputs the acquired information on each of the items to the receiving unit 242 as item information. Furthermore, by previously outputting the item information to the receiving unit 242, the item output unit 232 does not need to output the item information when the first software is being executed.

The input unit 233 receives, on the menu screen on which, for example, a plurality of items included in the first software is displayed, handwriting inputs, i.e., stroke inputs, performed by a user with respect to the display area of the items. Namely, the input unit 233 receives operation information, for example, stroke inputs from the display operation unit 111. The input unit 233 outputs the received stroke inputs to the receiving unit 242 as the strokes including the information on the coordinates. Furthermore, the input unit 233 may also include the order of the received stroke inputs in the strokes.

Furthermore, the input unit 233 determines whether the stroke inputs have been ended. If, for example, a predetermined period of time, for example, one second, has elapsed after the previous stroke was input, the input unit 233 determines that the stroke inputs have been ended. If the stroke inputs have not been ended, the input unit 233 receives a new stroke input. If the stroke input has been ended, the input unit 233 outputs the input completion information to the selection instruction unit 243 and allows the input strokes to be recognized.

If a multiple selection start instruction is input from the selection instruction unit 243, the selection unit 234 changes, for example, the display screen to the multiple selection mode (hereinafter, also referred to as a multiple input mode). Namely, if the change instruction to change to the multiple selection mode is input, the selection unit 234 changes the display screen to the multiple selection mode. Furthermore, if the selection instruction to select a plurality of items is input from the selection instruction unit 243, the selection unit 234 changes, to the selected state on the display screen that is in the multiple selection mode, the plurality of items associated with the selection instruction. Namely, the selection unit 234 allows the specified items to be the selected state. Furthermore, instead of the selection instruction to select the plurality of items, if an instruction to select the items in the order in which the items are input is input, the selection unit 234 changes, on the display screen that is in the multiple selection mode, the plurality of items associated with the subject instruction to the selected state in the order in which the items are input.

The selection unit 234 finalizes the selection state if a decision input used to finalize the selection state is input from the display operation unit 111 or if a predetermined period of time, for example, three seconds, has elapsed. The selection unit 234 shifts the display screen based on the information on the finalized and selected items. For example, if a plurality of items on the menu screen is selected, the selection unit 234 shifts the display screen to the menu screen on the basis of the selected items.

If the item information is input from the item output unit 232, the receiving unit 242 stores the input item information in, for example, the memory area that is reserved by the selection control unit 241 and that is the second software. Furthermore, the receiving unit 242 may also reserve the memory area in, for example, the storage unit 120. Namely, the receiving unit 242 may also store and save the input item information in the storage unit 120.

If a stroke is input from the input unit 233, the receiving unit 242 receives the stroke. The receiving unit 242 determines whether the received stroke is the first stroke or determines whether the previous stroke is the selection stroke. If the received stroke is the first stroke or if the previous stroke is the selection stroke, the receiving unit 242 performs the recognition of the handwritten character with respect to the received stroke. The receiving unit 242 determines whether, based on the recognition result of the handwritten character, the received stroke is the selection stroke. If the received stroke is the selection stroke, the receiving unit 242 sets the multiple selection flag by setting, for example, "1" to the multiple selection flag provided in the storage unit 120. Furthermore, the receiving unit 242 outputs the recognition result of the handwritten character to the selection instruction unit 243. Furthermore, if the order of stroke inputs is included in the received stroke, the receiving unit 242 stores the order of stroke inputs in the selection flag storage unit 121.

If the received stroke is not the first stroke or if the previous stroke is not the selection stroke, or, alternatively, if the received stroke is not the selection stroke, the receiving unit 242 deletes the multiple selection flag by setting, for example, "0" to the multiple selection flag.

If the recognition result of the handwritten character is input from the receiving unit 242 and the input completion information is input from the input unit 233, the selection instruction unit 243 starts the recognition of the input stroke. Namely, the selection instruction unit 243 determines whether the multiple selection flag has been set. If the multiple selection flag has been set, the selection instruction unit 243 specifies, based on the item information and the coordinates of the stroke input, the associated items from among the plurality of items. If the selection instruction unit 243 specifies the associated items, the selection instruction unit 243 outputs the multiple selection start instruction to the selection unit 234. Furthermore, after having output the multiple selection start instruction, the selection instruction unit 243 outputs the selection instruction to select the plurality of items to the selection unit 234. Furthermore, if the order of the stroke inputs is stored in the selection flag storage unit 121, the selection instruction unit 243 refers to the selection flag storage unit 121 and outputs, to the selection unit 234, an instruction to select the items in the order in which the items are input.

If the multiple selection flag has not been set, the selection instruction unit 243 outputs the recognition result of the handwritten character to the application execution unit 231 and outputs to, for example, the input field provided on the display screen. Namely, the selection instruction unit 243 reflects the recognition result of the handwritten character onto the display screen of the display operation unit 111.

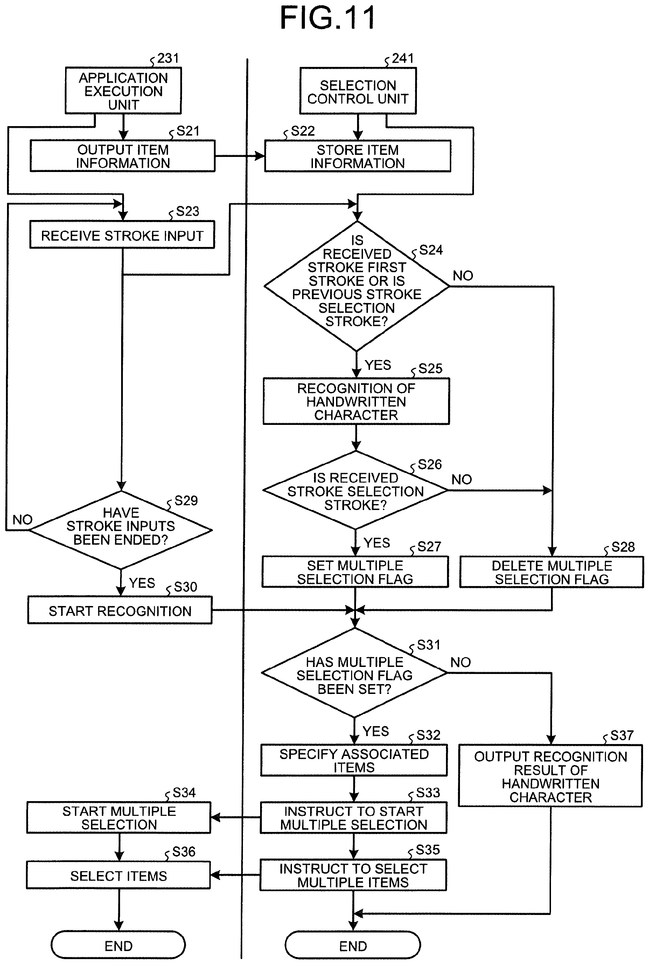

In the following, the operation of the terminal device 200 according to the second embodiment will be described. FIG. 11 is a flowchart illustrating an example of the selection receiving process according to the second embodiment.

The item output unit 232 acquires the information including the coordinates of each of the items on the screen on which two or more items included in the first software are displayed. The item output unit 232 outputs the information on each of the acquired items to the receiving unit 242 as the item information (Step S21). If the item information is input from the item output unit 232, the receiving unit 242 stores the input item information in the memory area (Step S22).

The input unit 233 receives operation information, for example, a stroke input from the display operation unit 111 (Step S23). The input unit 233 outputs the received stroke input to the receiving unit 242 as the stroke including the information on the coordinates.

If a stroke is input from the input unit 233, the receiving unit 242 receives the stroke. The receiving unit 242 determines whether the received stroke is the first stroke or determines whether the previous stroke is the selection stroke (Step S24). If the received stroke is the first stroke or if the previous stroke is the selection stroke (Yes at Step S24), the receiving unit 242 performs the recognition of the handwritten character with respect to the received stroke (Step S25).

The receiving unit 242 determines whether, based on the recognition result of the handwritten character, the received stroke is the selection stroke (Step S26). If the received stroke is the selection stroke (Yes at Step S26), the receiving unit 242 sets the multiple selection flag (Step S27). Furthermore, the receiving unit 242 outputs the recognition result of the handwritten character to the selection instruction unit 243.

If the received stroke is not the selection stroke (No at Step S26), the receiving unit 242 deletes the multiple selection flag (Step S28). Furthermore, if the received stroke is not the first stroke or if the previous stroke is not the selection stroke (No at Step S24), the receiving unit 242 deletes the multiple selection flag (Step S28).

The input unit 233 determines whether the stroke inputs have been ended (Step S29). If the stroke inputs have not been ended (No at Step S29), the input unit 233 returns to Step S23. If the stroke inputs have been ended (Yes at Step S29), the input unit 233 outputs the input completion information to the selection instruction unit 243 and starts the recognition of the input stroke (Step S30) .

If the recognition result of the handwritten character is input from the receiving unit 242 and if the input completion information is input from the input unit 233, the selection instruction unit 243 starts the recognition of the input stroke. Namely, the selection instruction unit 243 determines whether the multiple selection flag has been set (Step S31). If the multiple selection flag has been set (Yes at Step S31), the selection instruction unit 243 specifies, based on the item information and the coordinates of the stroke input, the associated items from among the plurality of items (Step S32). If the selection instruction unit 243 specifies the associated items, the selection instruction unit 243 outputs the multiple selection start instruction to the selection unit 234 (Step S33).

If the multiple selection start instruction is input from the selection instruction unit 243, the selection unit 234 changes, for example, the display screen to the multiple selection mode, i.e., starts the multiple selection (Step S34). Furthermore, after having output the multiple selection start instruction, the selection instruction unit 243 outputs the selection instruction to select the plurality of items to the selection unit 234 (Step S35). If the selection instruction to select the plurality of items is input from the selection instruction unit 243, the selection unit 234 changes, on the display screen that is in the multiple selection mode, the plurality of items associated with the selection instruction to the selected state. Namely, the selection unit 234 sets the specified items to the selected state (Step S36). If the decision input for finalizing the selection state is input from the display operation unit 111 or after elapse of a predetermined period of time, the selection unit 234 finalizes the selection state. The selection unit 234 shifts the display screen based on the information on the finalized and selected items.

If the multiple selection flag has not been set (No at Step S31), the selection instruction unit 243 outputs the recognition result of the handwritten character to the application execution unit 231 (Step S37) and reflects the recognition result onto the display screen of the display operation unit 111. Consequently, the terminal device 200 can promptly select the plurality of items. Furthermore, the terminal device 200 can perform an input of a character and an input for controlling, for example, a shift of the menu screen, or the like, without distinction. Namely, because the terminal device 200 does not need to switch an input of a character and an input for controlling, for example, a shift of the menu screen, or the like, the terminal device 200 can promptly select the plurality of items.

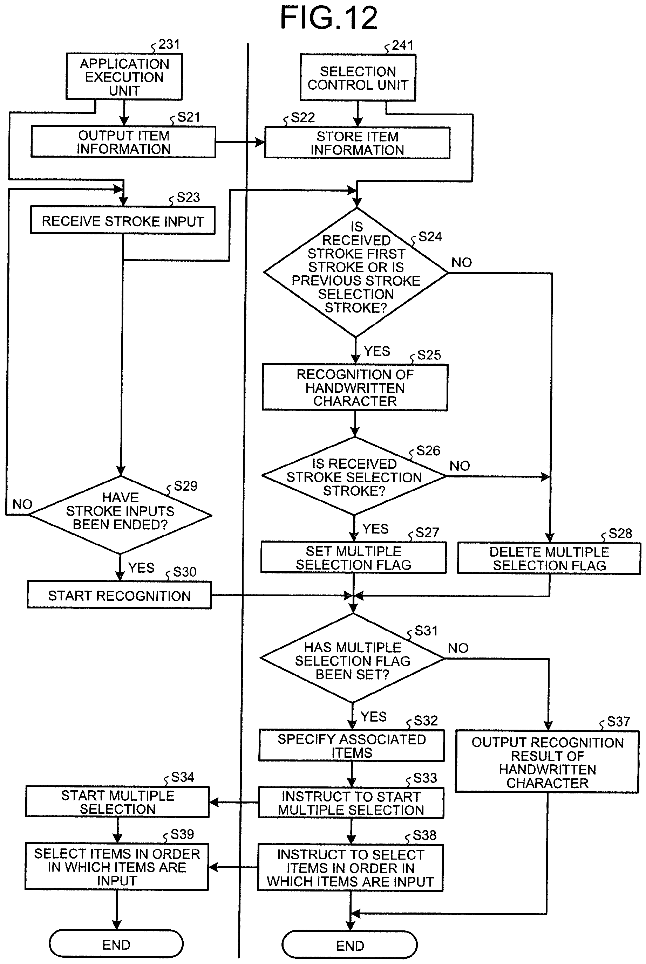

In the following, the selection receiving process performed when a plurality of items is selected based on the order of the inputs of selection strokes will be described with reference to FIG. 12. FIG. 12 is a flowchart illustrating another example of the selection receiving process according to the second embodiment. Furthermore, in a description of the selection receiving process illustrated in FIG. 12, regarding the steps in which the same process as that performed in the selection receiving process illustrated in FIG. 11, descriptions thereof will be omitted.

In the selection receiving process illustrated in FIG. 12, the input unit 233 includes, at Step S23, the order of received stroke inputs in the stroke. Furthermore, if the order of stroke inputs is included in the received stroke, the receiving unit 242 stores the order of stroke inputs in the selection flag storage unit 121.

After having output the multiple selection start instruction at Step S33, the selection instruction unit 243 refers to the selection flag storage unit 121 and outputs, to the selection unit 234, an instruction to select the items in the input order (Step S38). If the instruction to select the items in the input order is input, the selection unit 234 changes, on the display screen that is in the multiple selection mode, the plurality of items associated with the instruction to the selected state in the order in which the items are input. Namely, the selection unit 234 sets the state of the specified items to the selected state (Step S39). If the decision input for finalizing the selection state is input from the display operation unit 111 or after elapse of a predetermined period of time, the selection unit 234 finalizes the selection state. The selection unit 234 shifts the display screen based on the information on the finalized and selected item including the input order. Consequently, the terminal device 200 can reflect the input order and promptly select the plurality of items.

Furthermore, in the second embodiment described above, the selection control unit 241 that executes the second software is provided in the terminal device 200; however, the embodiment is not limited to this. For example, the selection control unit 241 that executes the second software and the selection flag storage unit 121 may also be provided in another information processing apparatus and various kinds of information and instructions may also be sent and received to and from the other information processing apparatus. Namely, in an input and an output of the various kinds of information, sending and receiving of various kinds of information and instructions may also be included. Furthermore, in the sending and receiving of the various kinds of information, an input and an output of the various kinds of information and instructions may also be included.

In this way, the terminal device 200 receives the handwriting input that designates a plurality of items with respect to the screen on which two or more items created by the first software are displayed. Furthermore, the terminal device 200 sends, to the first software in accordance with the designated content of the handwriting input, the change instruction to change to the multiple input mode and the selection instruction to select a plurality of items. Consequently, it is possible to promptly select the plurality of items while reducing an amount of modification performed by the first software that is various kinds of applications.

Furthermore, the terminal device 200 sends, in accordance with the decision input, an instruction to finalize the selection state. Consequently, a user can control the finalization timing of the selection state.

Furthermore, after elapse of a predetermined period of time, the terminal device 200 sends an instruction to finalize the selection state. Consequently, it is possible for a user to promptly select a plurality of items by simply selecting the target items.

Furthermore, the terminal device 200 sends, to the first software in accordance with the designated order of handwriting inputs and the designated content, the change instruction to change to the multiple input mode the selection instruction to select the plurality of items in the designated order. Consequently, it is possible to promptly select the plurality of items in consideration of the input order.

Furthermore, in the second embodiment described above, the items associated with the selection strokes are specified by the selection control unit 241; however, the embodiment is not limited to this. For example, instead of the application execution unit 231 and the selection control unit 241, an application execution unit 331 and a selection control unit 341 may also be provided, the information on the selection strokes may also be output from the selection control unit 341 to the application execution unit 331, and the associated items may also be specified on the application execution unit 331 side. The embodiment in this case will be described below as a third embodiment.

### Third Embodiment

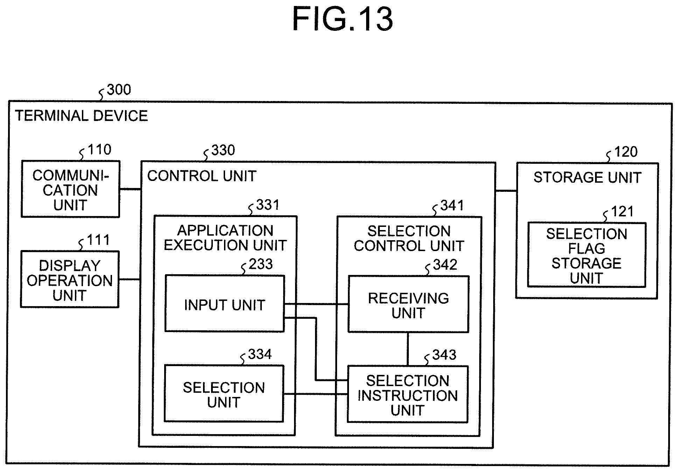

FIG. 13 is a block diagram illustrating an example of a terminal device according to a third embodiment. Furthermore, by assigning the same reference numerals to components having the same configuration as those in the terminal device 200 according to the second embodiment, overlapped configurations and operations thereof will be omitted. A terminal device 300 according to the third embodiment differs from the terminal device 200 according to the second embodiment in that the sending and receiving of the item information is omitted, information on the selection stroke is output from the selection control unit 341 to the application execution unit 331, and the associated items are specified on the application execution unit 331 side.

The terminal device 300 differs from the terminal device 200 in that a control unit 330 includes the application execution unit 331 and the selection control unit 341, instead of the application execution unit 231 and the selection control unit 241. Furthermore, in a description of the terminal device 300, descriptions of the same parts as those in the terminal device 200 will be omitted. The application execution unit 331 includes the input unit 233 and a selection unit 334. Furthermore, the selection control unit 341 includes a receiving unit 342 and a selection instruction unit 343.

The selection unit 334 receives an input of the selection stroke information including the coordinates of the selection stroke from the selection instruction unit 343. Furthermore, the order of stroke inputs may also be included in the selection stroke information. The selection unit 334 specifies, based on the input selection stroke information, the associated items from among the plurality of items. When the selection unit 334 specifies the associated items, the selection unit 334 starts the multiple selection. Namely, the selection unit 334 changes the display screen to the multiple selection mode. The selection unit 334 changes, on the display screen that is in the multiple selection mode, the plurality of items associated with the selection stroke information to the selected state. Namely, the selection unit 334 sets the specified items to the selected state. Furthermore, if the order of stroke inputs is included in the selection stroke information, the selection unit 334 changes, on the display screen that is in the multiple selection mode, the plurality of associated items to the selected state in the order in which the items are input.

If the decision input for finalizing the selection state is input from the display operation unit 111 or if a predetermined period of time, for example, three seconds, has elapsed, the selection unit 334 finalizes the selection state. The selection unit 334 shifts the display screen based on the information on the finalized and selected items.

If a stroke is input from the input unit 233, the receiving unit 342 receives a stroke. The receiving unit 342 determines whether the received stroke is the first stroke or determines whether the previous stroke is the selection stroke. If the received stroke is the first stroke or if the previous stroke is the selection stroke, the receiving unit 342 performs the recognition of the handwritten character with respect to the received stroke. The receiving unit 342 determines whether, based on the recognition result of the handwritten character, the received stroke is the selection stroke. If the received stroke is the selection stroke, the receiving unit 342 sets the multiple selection flag by setting, for example, "1" to the multiple selection flag provided in the storage unit 120. Furthermore, the receiving unit 342 outputs the recognition result of the handwritten character to the selection instruction unit 343. Furthermore, if the order of stroke inputs is included in the received stroke, the receiving unit 342 stores the order of stroke inputs in the selection flag storage unit 121.

If the received stroke is not the first stroke or if the previous stroke is not the selection stroke, or, alternatively, if the received stroke is not the selection stroke, the receiving unit 342 deletes the multiple selection flag by setting, for example, "0" to the multiple selection flag.

If the recognition result of the handwritten character is input from the receiving unit 342 and if the input completion information is input from the input unit 233, the selection instruction unit 343 starts the recognition of the input stroke. Namely, the selection instruction unit 343 determines whether the multiple selection flag has been set. If the multiple selection flag has been set, the selection instruction unit 343 outputs the selection stroke information including the coordinates of the selection stroke to the selection unit 334. Furthermore, if the order of stroke inputs is stored in the selection flag storage unit 121, the selection instruction unit 343 refers to the selection flag storage unit 121, includes the order of stroke inputs in the selection stroke information, and outputs the selection stroke information to the selection unit 334.

If the multiple selection flag has not been set, the selection instruction unit 343 outputs the recognition result of the handwritten character to the application execution unit 331 and to, for example, the input field provided on the display screen. Namely, the selection instruction unit 343 reflects the recognition result of the handwritten character onto the display screen of the display operation unit 111.

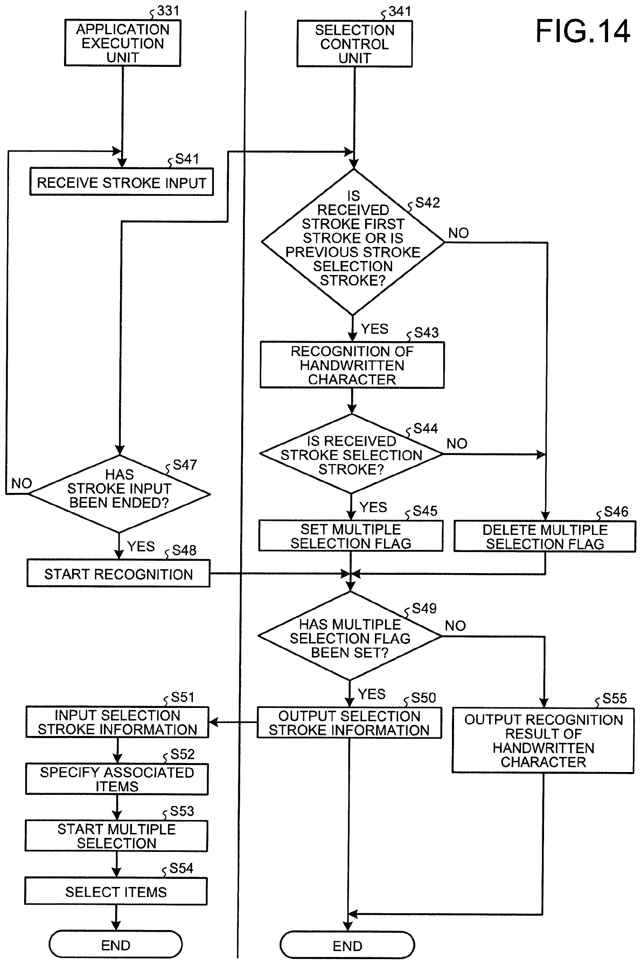

In the following, an operation of the terminal device 300 according to the third embodiment will be described. FIG. 14 is a flowchart illustrating an example of the selection receiving process according to the third embodiment.

The input unit 233 receives operation information, for example, stroke inputs, from the display operation unit 111 (Step S41). The input unit 233 outputs the received stroke inputs to the receiving unit 342 as the strokes including the information on the coordinates.

If the stroke is input from the input unit 233, the receiving unit 342 receives the stroke. The receiving unit 342 determines whether the received stroke is the first stroke or determines whether the previous stroke is the selection stroke (Step S42). If the received stroke is the first stroke or if the previous stroke is the selection stroke (Yes at Step S42), the receiving unit 342 performs the recognition of the handwritten character with respect to the received stroke (Step S43).

The receiving unit 342 determines whether, based on the recognition result of the handwritten character, the received stroke is the selection stroke (Step S44). If the received stroke is the selection stroke (Yes at Step S44), the receiving unit 342 sets the multiple selection flag (Step S45). Furthermore, the receiving unit 342 outputs the recognition result of the handwritten character to the selection instruction unit 343.

If the received stroke is not the selection stroke (No at Step S44), the receiving unit 342 deletes the received multiple selection flag (Step S46). Furthermore, if the received stroke is not the first stroke or if the previous stroke is not the selection stroke (No at Step S42), the receiving unit 342 deletes the received multiple selection flag (Step S46).

The input unit 233 determines whether the stroke inputs have been ended (Step S47). If the stroke inputs have not been ended (No at Step S47), the input unit 233 returns to Step S41. If the stroke inputs have been ended (Yes at Step S47), the input unit 233 outputs the input completion information to the selection instruction unit 343 and starts the recognition of the input stroke (Step S48) .

If the recognition result of the handwritten character is input from the receiving unit 342 and if the input completion information is input from the input unit 233, the selection instruction unit 343 starts the recognition of the input stroke. Namely, the selection instruction unit 343 determines whether the multiple selection flag has been set (Step S49). If the multiple selection flag has been set (Yes at Step S49), the selection instruction unit 343 outputs the selection stroke information including the coordinates of the selection stroke to the selection unit 334 (Step S50).

The selection stroke information is input to the selection instruction unit 343 from the selection unit 334 (Step S51). The selection unit 334 specifies, based on the input selection stroke information, the associated items from among the plurality of items (Step S52). When the selection unit 334 specifies the associated items, the selection unit 334 starts the multiple selection (Step S53). Namely, the selection unit 334 changes the display screen to the multiple selection mode. The selection unit 334 changes, on the display screen that is in the multiple selection mode, the plurality of items associated with the selection stroke information to the selected state. Namely, the selection unit 334 sets the specified items to the selected state (Step S54). If the decision input for finalizing the selection state is input from the display operation unit 111 or after elapse of a predetermined period of time, the selection unit 334 finalizes the selection state. The selection unit 334 shifts the display screen based on the information on the finalized and selected items.

If the multiple selection flag has not been set (No at Step S49), the selection instruction unit 343 outputs the recognition result of the handwritten character to the application execution unit 331 (Step S55) and reflects the recognition result onto the display screen of the display operation unit 111. Consequently, the terminal device 300 can promptly select the plurality of items. Furthermore, the terminal device 300 can perform an input of a character and an input for controlling, for example, a shift of the menu screen, or the like, without distinction. Namely, because the terminal device 300 does not need to switch an input of a character and an input for controlling, for example, a shift of the menu screen, or the like, the terminal device 300 can promptly select the plurality of items.

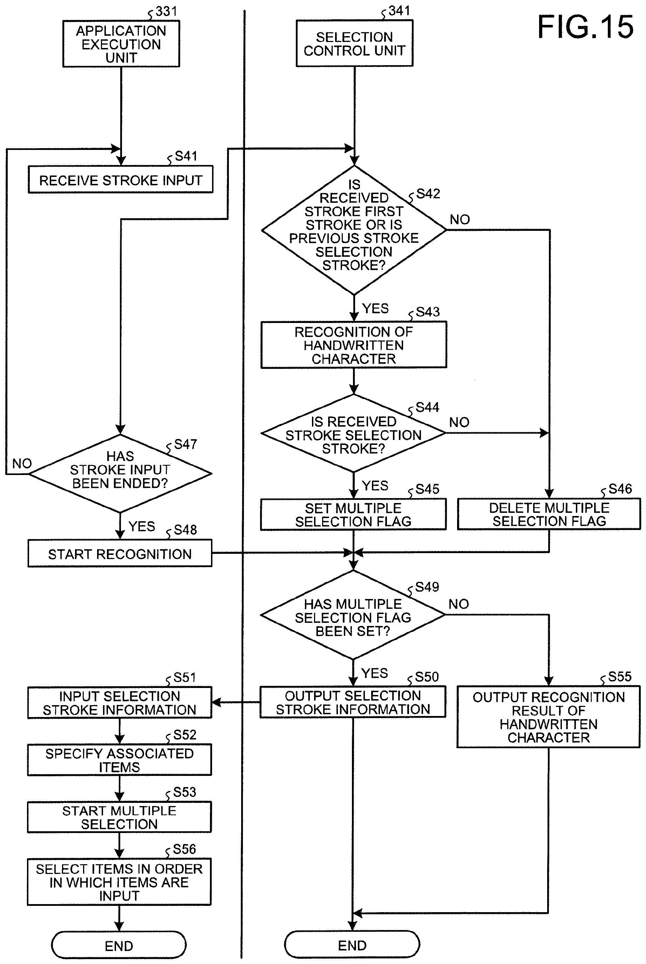

In the following, the selection receiving process performed when a plurality of items is selected based on the order of the inputs of selection strokes will be described with reference to FIG. 15. FIG. 15 is a flowchart illustrating another example of the selection receiving process according to the third embodiment. Furthermore, in a description of the selection receiving process illustrated in FIG. 15, regarding the steps in which the same process as that performed in the selection receiving process illustrated in FIG. 14, descriptions thereof will be omitted.

In the selection receiving process illustrated in FIG. 14, the input unit 233 includes, at Step S41, the order of stroke inputs in the stroke. Furthermore, if the order of stroke inputs is included in the received stroke, the receiving unit 342 stores the order of stroke inputs in the selection flag storage unit 121.

The selection instruction unit 343 refers to, at Step S50, the selection flag storage unit 121, includes the order of stroke inputs in the selection stroke information, and outputs the selection stroke information to the selection unit 334.

After having started the multiple selection at Step S53, the selection unit 334 changes, on the display screen that is in the multiple selection mode, the plurality of items associated with the selection stroke information to the selected state in the order in which the items are input. Namely, selection unit 334 sets the specified items to the selected state in the order in which the items are input (Step S56). If the decision input for finalizing the selection state is input from the display operation unit 111 or if a predetermined period of time has elapsed, the selection unit 334 finalizes the selection state. The selection unit 334 shifts the display screen based on the information on the finalized and selected items including the order in which the items are input. Consequently, the terminal device 300 can reflect the input order and promptly select the plurality of items.

Furthermore, in the second embodiment described above, the items associated with the selection strokes are specified by the selection control unit 241; however, the embodiment is not limited to this. Furthermore, in the second and the third embodiments described above, the stroke inputs are received by the application execution units 231 or 331; however, the embodiments are not limited to these. For example, instead of the application execution unit 231 or 331 and selection control unit 241 or 341, an application execution unit 431 and a selection control unit 441 may also be provided and a stroke input may also be received on the selection control unit 441 side. The embodiment in this case will be described below as a fourth embodiment.

### Fourth Embodiment

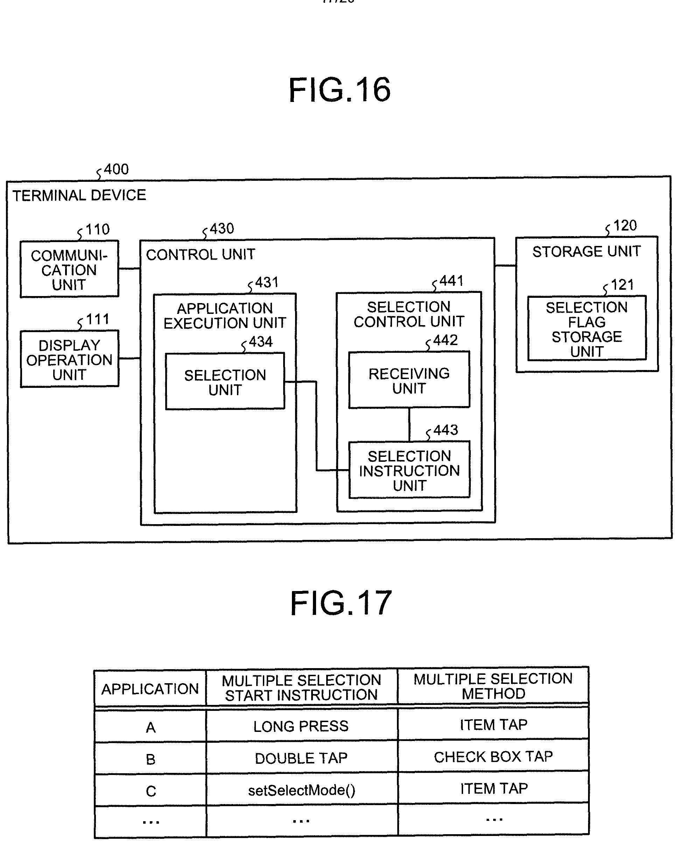

FIG. 16 is a block diagram illustrating an example of a terminal device according to a fourth embodiment. Furthermore, by assigning the same reference numerals to components having the same configuration as those in the terminal devices 200 and 300 according to the second and the third embodiments, overlapped configurations and operations thereof will be omitted. A terminal device 400 according to the fourth embodiment differs from the terminal devices 200 and 300 according to the second and the third embodiments in that the first software executed by the application execution unit 431 is the same as in a case in which a user operates the function related to the selection receiving process. Namely, the first software is used without modifying the existing software.

The terminal device 400 differs from the terminal device 300 in that control unit 430 includes the application execution unit 431 and the selection control unit 441, instead of the application execution unit 331 and the selection control unit 341. Furthermore, in a description of the terminal device 400, descriptions of the same parts as those in the terminal device 300 will be omitted. The application execution unit 431 includes a selection unit 434. Furthermore, the selection control unit 441 includes a receiving unit 442 and a selection instruction unit 443.

If the multiple selection start instruction is input from the selection instruction unit 443, the selection unit 434 changes, for example, the display screen to the multiple selection mode. Namely, if the change instruction to change to the multiple selection mode is input, the selection unit 434 changes the display screen to the multiple selection mode. Furthermore, if the selection instruction to select a plurality of items is input from the selection instruction unit 443, the selection unit 434 changes, on the display screen that is in the multiple selection mode, the plurality of items associated with the selection instruction to the selected state. Namely, the selection unit 434 sets the specified items to the selected state. Furthermore, instead of the selection instruction to select the plurality of items, if the instruction to select the items in the order in which the items are input is input, the selection unit 434 changes, on the display screen that is in the multiple selection mode, the plurality of items associated with the subject instruction to the selected state in the order in which the items are input. Furthermore, if the decision instruction is input from the selection instruction unit 443, the selection unit 434 shifts the display screen based on the information on the finalized and selected items.

It is assumed that the multiple selection start instruction and the multiple selection method performed in the selection unit 434 is the instruction and the method associated with existing software. FIG. 17 is a diagram illustrating an example of the multiple selection start instruction. As illustrated in FIG. 17, for example, in an application A that is the existing software, the multiple selection start instruction is a "long press". Furthermore, in the application A, the multiple selection method is an "item tap". Similarly, in an application B, the multiple selection start instruction is a "double tap" and the multiple selection method is a "check box tap". Furthermore, in an application C, the multiple selection start instruction uses, for example, "setSelectMode()" that is an application programming interface (API) provided by an operating system (OS) and the multiple selection method is an "item tap". Furthermore, an example of the OS includes Android. Namely, by previously setting the multiple selection start instruction and the multiple selection method to each of the pieces of the existing software that are the first software, the selection control unit 441 operates the first software.

A description will be given here by referring back to FIG. 16. By superimposing the layer in which the stroke input of the first software is acquired onto the display screen that is displayed on the display operation unit 111, the receiving unit 442 simultaneously acquires the stroke input performed with respect to the first software. The receiving unit 442 identifies the received stroke input as the stroke including the information on the coordinates. Furthermore, the receiving unit 442 may also include the order of received stroke inputs in the stroke.

The receiving unit 442 determines whether the received stroke is the first stroke or determined whether the previous stroke is the selection stroke. If the received stroke is the first stroke or if the previous stroke is the selection stroke, the receiving unit 442 performs the recognition of the handwritten character with respect to the received stroke. The receiving unit 442 determines whether, based on the recognition result of the handwritten character, the received stroke is the selection stroke. If the received stroke is the selection stroke, the receiving unit 442 sets the multiple selection flag by setting, for example, "1" to the multiple selection flag provided in the storage unit 120. Furthermore, the receiving unit 442 outputs the recognition result of the handwritten character to the selection instruction unit 443. Furthermore, if the order of stroke inputs is included in the received stroke, the receiving unit 442 stores the order of stroke inputs in the selection flag storage unit 121.

If the received stroke is not the first stroke or if the previous stroke is not the selection stroke, or, alternatively, if the received stroke is not the selection stroke, the receiving unit 442 deletes the multiple selection flag by setting ,for example, "0" to the multiple selection flag.

Furthermore, the receiving unit 442 determines whether the stroke inputs have been ended. If, for example, a predetermined period of time, for example, one second, has elapsed after an input of the previous stroke, the receiving unit 442 determines that the stroke inputs have been ended. If the stroke inputs have not been ended, the receiving unit 442 receives a new stroke input. If the stroke inputs have been ended, the receiving unit 442 outputs the input completion information to the selection instruction unit 443.

If the recognition result of the handwritten character and the input completion information are input from the receiving unit 442, the selection instruction unit 443 starts the recognition of the input stroke. Namely, the selection instruction unit 443 determines whether the multiple selection flag has been set. If the multiple selection flag has been set, the selection instruction unit 443 specifies, based on the coordinates of the stroke inputs, the associated items from among the plurality of items. If the selection instruction unit 443 specifies the associated items, the selection instruction unit 443 outputs the multiple selection start instruction to the selection unit 434. Furthermore, after having output the multiple selection start instruction, the selection instruction unit 443 outputs the selection instruction to select the plurality of items to the selection unit 434. Furthermore, if the order of stroke inputs is stored in the selection flag storage unit 121, the selection instruction unit 443 refers to the selection flag storage unit 121 and outputs, to the selection unit 434, the instruction to select the items in the order in which the items are received. Furthermore, if the decision input for finalizing the selection state is input from the display operation unit 111 or after elapse of a predetermined period of time, for example, three seconds, the selection instruction unit 443 outputs an instruction to finalize the selection state to the selection unit 434.

If the multiple selection flag has not been set, the selection instruction unit 443 outputs the recognition result of the handwritten character to the application execution unit 431 and outputs to, for example, the input field provided on the display screen. Namely, the selection instruction unit 443 reflects the recognition result of the handwritten character onto the display screen of the display operation unit 111.

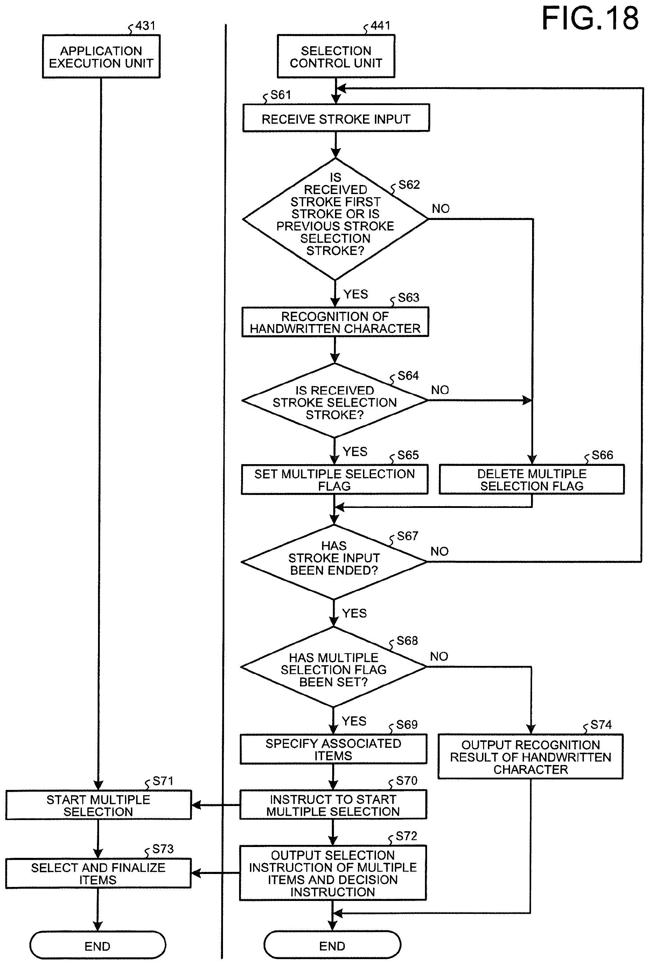

In the following, an operation of the terminal device 400 according to the fourth embodiment will be described. FIG. 18 is a flowchart illustrating an example of the selection receiving process according to the fourth embodiment.

The receiving unit 442 simultaneously acquires and receives the stroke inputs performed with respect to the first software (Step S61). The receiving unit 442 identifies the received stroke inputs as the stroke including the information on the coordinates. The receiving unit 442 determines whether the received stroke is the first stroke or determines whether the previous stroke is the selection stroke (Step S62). If the received stroke is the first stroke or the previous stroke is the selection stroke (Yes at Step S62), the receiving unit 442 performs the recognition of the handwritten character with respect to the received stroke (Step S63).

The receiving unit 442 determines whether, based on the recognition result of the handwritten character, the received stroke is the selection stroke (Step S64). If the received stroke is the selection stroke (Yes at Step S64), the receiving unit 442 sets the multiple selection flag (Step S65). Furthermore, the receiving unit 442 outputs the recognition result of the handwritten character to the selection instruction unit 443.

If the received stroke is not the selection stroke (No at Step S64), the receiving unit 442 deletes the received multiple selection flag (Step S66). Furthermore, if the received stroke is not the first stroke or if the previous stroke is not the selection stroke (No at Step S62), the receiving unit 442 deletes the received multiple selection flag (Step S66).

The receiving unit 442 determines whether the stroke inputs have been ended (Step S67). If the stroke inputs have not been ended (No at Step S67), the receiving unit 442 returns to Step S61. If the stroke inputs have been ended (Yes at Step S67), the receiving unit 442 outputs the input completion information to the selection instruction unit 443.

If the recognition result of the handwritten character and the input completion information are input from the receiving unit 442, the selection instruction unit 443 starts the recognition of the input stroke. Namely, the selection instruction unit 443 determines whether the multiple selection flag has been set (Step S68). If the multiple selection flag has been set (Yes at Step S68), the selection instruction unit 443 specifies the associated items from among the plurality of items based on the coordinates of the stroke inputs (Step S69). If the selection instruction unit 443 specifies the associated items, the selection instruction unit 443 outputs the multiple selection start instruction to the selection unit 434 (Step S70).

If the multiple selection start instruction is input from the selection instruction unit 443, the selection unit 434 changes, for example, the display screen to the multiple selection mode, i.e., starts the multiple selection (Step S71). Furthermore, after having output the multiple selection start instruction, the selection instruction unit 443 outputs the selection instruction to select a plurality of items and the decision instruction to the selection unit 434 (Step S72). If the selection instruction to select a plurality of items and the decision instruction are received from the selection instruction unit 443, the selection unit 434 changes, on the display screen that is in the multiple selection mode, the plurality of items associated with the selection instruction to the selected state. Namely, the selection unit 434 sets the specified items to be the selected state and finalizes the state (Step S73). The selection unit 434 shifts the display screen based on the information on the finalized and selected items.

If the multiple selection flag has not been set (No at Step S68), the selection instruction unit 443 outputs the recognition result of the handwritten character to the application execution unit 431 (Step S74) and reflects the recognition result onto the display screen of the display operation unit 111. Consequently, the terminal device 400 can promptly select the plurality of items. Furthermore, the terminal device 400 can perform an input of a character and an input for controlling, for example, a shift of the menu screen, or the like, without distinction. Namely, because the terminal device 400 does not need to switch an input of a character and an input for controlling, for example, a shift of the menu screen, or the like, the terminal device 400 can promptly select the plurality of items.

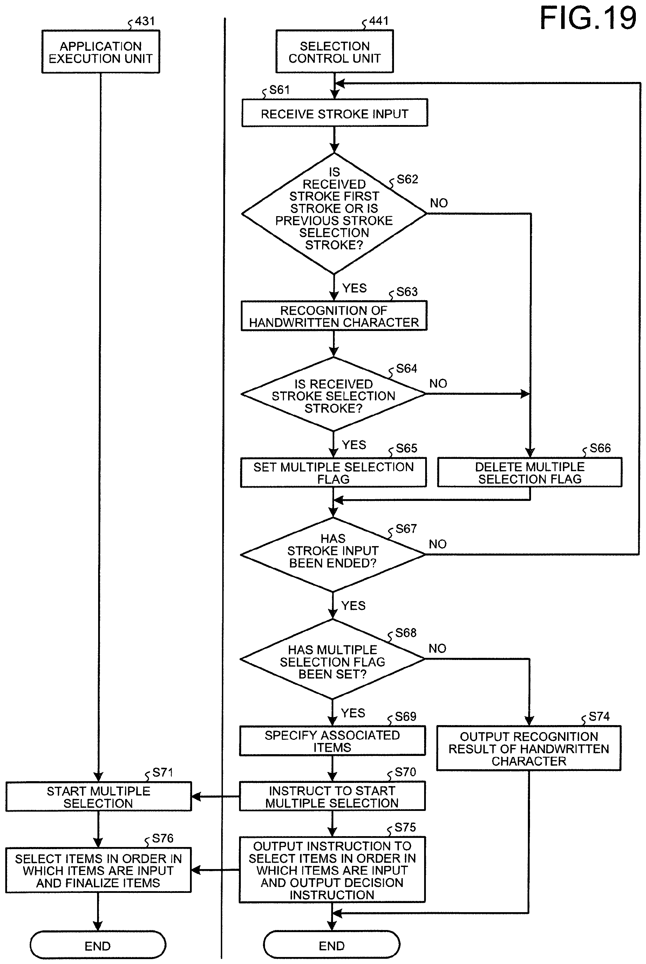

In the following, the selection receiving process performed when a plurality of items is selected based on the order of the inputs of selection strokes will be described with reference to FIG. 19. FIG. 19 is a flowchart illustrating another example of the selection receiving process according to the fourth embodiment. Furthermore, in a description of the selection receiving process illustrated in FIG. 19, regarding the steps in which the same process as that performed in the selection receiving process illustrated in FIG. 18, descriptions thereof will be omitted.

In the selection receiving process illustrated in FIG. 19, at Step S61, the receiving unit 442 includes the order of the received stroke inputs in the stroke. Furthermore, if the order of stroke inputs is included in the received stroke, the receiving unit 442 stores the order of stroke inputs in the selection flag storage unit 121.

After having output the multiple selection start instruction at Step S70, the selection instruction unit 443 refers to the selection flag storage unit 121 and outputs the instruction to select the items in the order in which the items are input and the decision instruction to the selection unit 434 (Step S75). If the instruction to select the items in the order in which the items are input and the decision instruction are input, the selection unit 434 changes, on the display screen that is in the multiple selection mode, the plurality of items associated with the subject instruction to the selected state in the order in which the items are input and finalizes the items. Namely, the selection unit 434 sets the specified items to the selected state in the order in which the items are input and finalizes the items (Step S76). The selection unit 434 shifts the display screen based on the information on the finalized and selected items including the input order. Consequently, the terminal device 400 can reflect the input order and promptly select the plurality of items.

Furthermore, in the third and the fourth embodiments described above, the selection control units 341 and 441 that execute the second software are provided in the terminal devices 300 and 400, respectively; however, the configuration is not limited to these embodiments. For example, the selection control units 341 and 441 that execute the second software and the selection flag storage unit 121 may also be provided in another information processing apparatus and various kinds of information and instructions may also be sent and received to and from the other information processing apparatus. Namely, sending and receiving various kinds of information and instructions that are sent and received may also be included in an input and/or an output of the various kinds of information and instructions. Furthermore, an input and/or an output of the various kinds of information and instructions may also be included in the sending and the receiving of the various kinds of information and instructions.

The components of each unit illustrated in the drawings are not always physically configured as illustrated in the drawings. In other words, the specific shape of a separate or integrated unit is not limited to the drawings; however, all or part of the unit can be configured by functionally or physically separating or integrating any of the units depending on various kinds of loads or use conditions. For example, the selection control units 241, 341, and 441 and the selection flag storage unit 121 according to the second to the fourth embodiments may also be separated into other information processing apparatuses.

Furthermore, all or any part of various processing functions performed by each unit may also be executed by a CPU (or a microcomputer, such as an MPU, a micro controller unit (MCU), or the like). Furthermore, all or any part of various processing functions may also be, of course, executed by programs analyzed and executed by the CPU (or the microcomputer, such as the MPU or the MCU), or executed by hardware by wired logic.

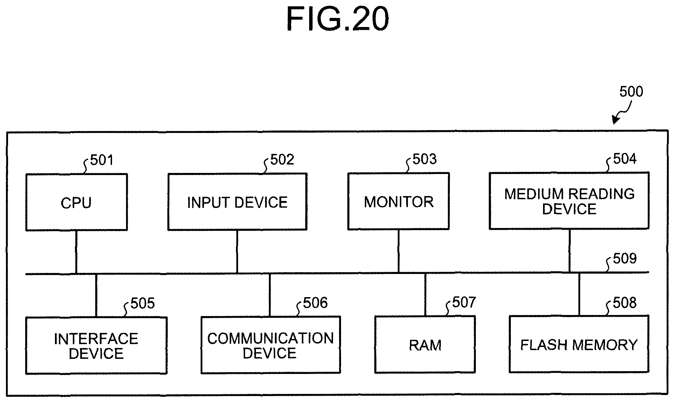

The various processes described in the above embodiments can be implemented by programs prepared in advance and executed by a computer. Accordingly, in the following, an example of a computer that executes programs having the same function as that described in the embodiments described above will be described. FIG. 20 is a diagram illustrating an example of a computer that executes a selection program.

As illustrated in FIG. 20, a computer 500 includes a CPU 501 that executes various kinds of arithmetic processing, an input device 502 that received a data input, and a monitor 503. Furthermore, the computer 500 includes a medium reading device 504 that reads programs or the like from a storage medium, an interface device 505 that is used to connect various devices, and a communication device 506 that is used to connect to the other information processing apparatuses in a wired or wireless manner. Furthermore, the computer 500 includes a RAM 507 that temporarily stores therein various kinds of information and a flash memory 508. Furthermore, each of the devices 501 to 508 is connected to a bus 509.

The flash memory 508 stores therein a selection program having the same function as that performed by each of the processing units, such as the receiving unit 131 and the selection unit 132 illustrated in FIG. 1 or the item output unit 232, the input unit 233, the selection unit 234, the receiving unit 242, and the selection instruction unit 243 illustrated in FIG. 10. Alternatively, the flash memory 508 stores therein the selection program having the same function as that performed by each of the processing units, such as the input unit 233, the selection unit 334, the receiving unit 342, and the selection instruction unit 343 illustrated in FIG. 13 or the selection unit 434, the receiving unit 442, and the selection instruction unit 443 illustrated in FIG. 16. Furthermore, the flash memory 508 stores therein various kinds of data that implements the selection program. The input device 502 receives an input of various kinds of information, such as operation information, or the like, from, for example, a user of the computer 500. The monitor 503 displays various screens, such as a menu screen, or the like, with respect to, for example, a user of the computer 500. For example, a printer or the like is connected to the interface device 505. The communication device 506 has the same function as that performed by, for example, the communication unit 110 illustrated in FIG. 1, is connected to a network (not illustrated), and sends and receives various kinds of information to and from a server device (not illustrated).

The CPU 501 reads each of the programs stored in the flash memory 508 and loads and executes the programs in the RAM 507, thereby executing various processes. Furthermore, these programs can allow the computer 500 to function as the receiving unit 131 and the selection unit 132 illustrated in FIG. 1 or as the item output unit 232, the input unit 233, the selection unit 234, the receiving unit 242, and the selection instruction unit 243 illustrated in FIG. 10. Alternatively, these programs can allow the computer 500 to function as the input unit 233, the selection unit 334, the receiving unit 342, and the selection instruction unit 343 illustrated in FIG. 13 or as the selection unit 434, the receiving unit 442, and the selection instruction unit 443 illustrated in FIG. 16.

Furthermore, the selection program described above does not always need to be stored in the flash memory 508. For example, the computer 500 may also read and execute the program stored in a storage medium that can be read by the computer 500. Examples of the computer 500 readable storage medium include a portable recording medium, such as a CD-ROM, a DVD disk, a universal serial bus (USB) memory, or the like, a semiconductor memory, such as a flash memory or the like, and a hard disk drive. Furthermore, the selection program may also be stored in a device connected to a public circuit, the Internet, a LAN, or the like and execute the selection program from the recording medium described above.

### Reference Signs List

- 100, 200, 300, 400: terminal device
- 110: communication unit
- 111: display operation unit
- 120: storage unit
- 121: selection flag storage unit
- 130, 230, 330, 430: control unit
- 131: receiving unit
- 132: selection unit
- 231, 331, 431: application execution unit
- 232: item output unit
- 233: input unit
- 234, 334, 434: selection unit
- 241, 341, 441: selection control unit
- 242, 342, 442: receiving unit
- 243, 343, 443: selection instruction unit

## Claims

1. An item selection method comprising:
detecting, in accordance with a handwriting input related to a plurality of selection items in a displayed selection item group, the plurality of selection items as a selection target.

2. The item selection method according to claim 1, wherein the handwriting input related to the plurality of items is the handwriting input that passes each of areas of the plurality of items.

3. The item selection method according to claim 1, wherein the handwriting input related to the plurality of items is the handwriting input recognized as a predetermined character in each of the areas of the plurality of items.

4. The item selection method according to any one of claims 1 to 3, wherein the plurality of selection items detected as the selection target is displayed in a different way from that used to display an item that is not the selection target in the selection item group.

5. The item selection method according to any one of claims 1 to 3, wherein a display screen is shifted, in accordance with the detecting, to the display screen of information related to the plurality of selection items in the selection item group.

6. The item selection method according to claim 1, wherein the detecting includes detecting the plurality of selection items as the selection target in accordance with a decision input that is input after the handwriting input.

7. The item selection method according to claim 1, wherein the detecting includes recognizing a plurality of handwriting inputs performed at an interval equal to or less than a first predetermined period of time as the handwriting input related to the plurality of items.

8. The item selection method according to claim 1, wherein the detecting includes detecting the plurality of selection items as the selection target after a second predetermined period of time has elapsed from the handwriting input related to the plurality of selection items.

9. The item selection method according to any one of claims 1 to 8, wherein the detecting includes detecting, in the order of inputs of the handwriting inputs, the plurality of items as the selection target.

10. An item selection method executed by a computer, the item selection method comprising:
receiving a handwriting input that designates a plurality of items performed with respect to a screen on which two or more items created by first software are displayed; and
sending, to the first software in accordance with designated content of the handwriting input, a change instruction to change to a multiple input mode and a selection instruction to select the plurality of items.

11. The item selection method according to claim 10, wherein the sending includes sending, in accordance with a decision input that is input after the handwriting input, an instruction to finalize a selection state.

12. The item selection method according to claim 10, wherein the sending includes sending, after elapse of a predetermined period of time, an instruction to finalize a selection state.

13. The item selection method according to any one of claims 10 to 12, wherein the sending includes sending, to the first software in accordance with the designated order of the handwriting inputs and in accordance with the designated content, the change instruction to change to the multiple input mode and the selection instruction to select the plurality of items in the designated order.

14. An item selection program that causes a computer to execute a process comprising:
detecting, in accordance with a handwriting input related to a plurality of selection items in a displayed selection item group, the plurality of selection items as a selection target.

15. The item selection program according to claim 14, further comprising shifting, in accordance with the detecting, to a display screen of information related to the plurality of selection items in the selection item group.

16. The item selection program according to claim 14, wherein the detecting includes detecting the plurality of selection items as the selection target in accordance with a decision input that is input after the handwriting input.

17. An item selection program that causes a computer to execute a process comprising:
receiving a handwriting input that designates a plurality of items performed with respect to a screen on which two or more items created by first software are displayed; and
sending, to the first software in accordance with designated content of the handwriting input, a change instruction to change to a multiple input mode and a selection instruction to select the plurality of items.

18. The item selection program according to claim 17, wherein the sending includes sending, in accordance with a decision input that is input after the handwriting input, an instruction to finalize a selection state.

19. The item selection program according to claim 17, wherein the sending includes sending, after elapse of a predetermined period of time, an instruction to finalize a selection state.

20. A terminal device comprising:
a detecting unit that detects, in accordance with a handwriting input related to a plurality of selection items in a displayed selection item group, the plurality of selection items as a selection target.

21. The terminal device according to claim 20, further comprising a processing unit that shifts, in accordance with the detection, to a display screen of information related to the plurality of selection items in the selection item group.

22. The terminal device according to claim 20, wherein the detecting unit detects the plurality of selection items as the selection target in accordance with a decision input that is input after the handwriting input.

23. A terminal device comprising:
a receiving unit that receives a handwriting input that designates a plurality of items performed with respect to a screen on which two or more items created by first software are displayed; and
a selection instruction unit that sends, to the first software in accordance with designated content of the handwriting input, a change instruction to change to a multiple input mode and a selection instruction to select the plurality of items.

24. The terminal device according to claim 23, wherein the sending unit sends, in accordance with a decision input that is input after the handwriting input, an instruction to finalize a selection state.

25. The terminal device according to claim 23, wherein the sending unit sends, after elapse of a predetermined period of time, an instruction to finalize a selection state.

26. A menu display method comprising:
displaying a menu, from among menus each having a hierarchical structure, that is included in a first hierarchy having a selection item group; and
displaying, in accordance with a handwriting input related to a plurality of selection items in the displayed menu included in the first hierarchy, a menu including menus each of which is included in a lower level of the plurality of selection items.

27. A menu display program that causes a computer to execute a process comprising:
displaying a menu, from among menus each having a hierarchical structure, that is included in a first hierarchy having a selection item group; and
displaying, in accordance with a handwriting input related to a plurality of selection items in the displayed menu included in the first hierarchy, a menu including menus each of which is included in a lower level of the plurality of selection items.

28. A terminal device comprising:
a displaying unit that displays a menu, from among menus each having a hierarchical structure, that is included in a first hierarchy having a selection item group and that displays, in accordance with a handwriting input related to a plurality of selection items in the displayed menu included in the first hierarchy, a menu including menus each of which is included in a lower level of the plurality of selection items.
